# EUROPEAN PATENT APPLICATION

(11) **EP 1 148 434 A2**
(43) Date of publication of application: **24.10.2001**
(21) Application number: 01109148.5
(22) Date of filing: 12.04.2001
(51) Int. Cl.: G06F 17/60

(54) **Method to verify recipient of delivered article and method and system to deliver article to recipient and computer program storing medium thereof**

(30) Priority: 13.04.2000 JP 2000117179
(71) Applicant: NEC CORPORATION, Tokyo (JP)
(72) Inventor: Uchida, Kaoru, Minato-ku, Tokyo (JP)
(74) Representative: VOSSIUS & PARTNER

(57) **Abstract**

A technology, in which when an article, ordered by a person through a network being not meeting each other, is delivered to the person, the article can be surely delivered to the person who made the order by not allowing that another person pretends to be the person who made the order, and it can be verified that the article was delivered to the person who made the order, is provided. When a person orders an article, the person inputs his/her own fingerprint to an ordering terminal in addition to inputting order information including the article number of the article, its destination (the delivering address of the article), the payment method, the price, and so on. And a fingerprint feature of the inputted fingerprint and the order information are transmitted to an electronic commerce (EC) server through a network. The EC server transmits the fingerprint feature of the person who made the order and an order number attached to the order to a person verifying terminal installed in a shop designated by the person who made the order. And when a person who is to receive the article requires that the article is delivered, a sales clerk in the shop takes a fingerprint of the person who is to receive the article by using a person verifying terminal, and the person verifying terminal matches the fingerprint feature of the person who is to receive the article with the fingerprint feature of the person who made the order transmitted from the EC server. And only when the matched result is equal, the article is delivered to the person who is to receive the article. Further, verified information composed of the fingerprint feature of the person who received the article and the order number of the article are transmitted to the EC server, and the verified information is stored in verified information storage in the EC server.

## Description

The present invention relates to a method to verify the recipient of a delivered article, and method and system to deliver an article to a recipient, and a computer program storing medium thereof. In particular, the present invention relates to a technology to verify a recipient of a delivered article and a technology to deliver an article to a recipient by using the technology to verify the recipient of the delivered article, when an article ordered through an electronic commerce (EC) using such as the Internet is delivered to a person who made an order for the article.

At an EC using a network such as the Internet, in a case that merchandise is digital data, procedures from ordering merchandise to paying for the merchandise and delivering the merchandise can be completed on the network. However, in a case that the merchandise is an article being not data, a different paying system and a different delivering system for the article must be provided. And when an article is delivered to a person who made the order, the article is handed to the person who made the order by such as a home delivery service or at a convenience store that has a large delivering network.

At a case that the payment has already finished, or a case that the article is delivered in cash on delivery and the person who made the order does not want that the article is delivered to the other person, the recipient must be verified to be the person who made the order. In order to realize this verification, conventionally, several methods are used. That is, the article is delivered to an address designated by the person who made the order and the person who made the order is verified by his/her identification card, or by his/her credit card used at the payment. Or a receipt including his/her secret information issued by on line at the time of the payment is used to verify the person who made the order.

However, when the other person obtains any of these certificates, there is a problem that the article can be received by the other person who pretends to be the person who made the order. In the Japanese Patent Application Laid-Open No. HEI 11-96252, when an article is ordered by an EC through a network, the person who made the order is verified by using biometrics data such as the retina pattern, the fingerprint of the person who made the order. However, this technology is not a technology that verifies whether the recipient is the person who made the order or not at the time when the article is handed to the recipient.

It is therefore an object of the present invention to provide a technology in which when an article, ordered by a person through a network being not meeting each other, is handed to the person, the article can be surely handed to the person who made the order by certainly judging that the recipient is the person who made the order.

According to the present invention, for achieving the object mentioned above, there is provided a system to deliver an article to a recipient using a method to verify the recipient of a delivered article. At the system to deliver the article to the recipient using the method to verify the recipient of the delivered article, when a person makes an order for an article, the person inputs his/her own biometrics data such as a fingerprint to an ordering terminal in addition to inputting order information including the article number of the article, its destination (the delivering address of the article), the payment method, the price, and so on. And the biometrics data and the order information are transmitted to an electronic commerce (EC) server through a network. And the EC server transmits the biometrics data of the person who made the order and an order number of the article attached to the order information and the order information are transmitted to a person verifying terminal installed in a shop designated by the person who made the order. And when a recipient requires the shop to hand the article, a sales clerk in the shop takes a biometrics data of the recipient by using the person verifying terminal, and the biometrics data of the recipient and the biometrics data of the person who made the order transmitted from the EC server are matched. And only when the matched result is equal, the article is handed to the recipient. And when the article is delivered by a delivery person, the biometrics data of the recipient and the biometrics data of the person who made the order transmitted from the EC server are matched at the person verifying portable terminal carrying by the delivery person.

According to the present invention, at the system to deliver the article to the recipient using the method to verify the recipient of the delivered article, in order to prevent the biometrics data of the person who made the order from using illegally by that the biometrics data such as the fingerprint of the person who made the order is leaked, the biometrics data is encrypted.

According to the present invention, at the system to deliver the article to the recipient using the method to verify the recipient of the delivered article, in order to certify that the article was handed to the person who made the order, the biometrics data of the recipient inputted at the time when the article was handed is stored as verified information.

The objects and features of the present invention will become more apparent from the consideration of the following detailed description taken in conjunction with the accompanying drawings in which:
Fig. 1 is a block diagram showing a structure of a first embodiment of a system to deliver an article to a recipient using a method to verify the recipient of a delivered article of the present invention;
Fig. 2 is a flowchart showing processes at an order information inputting section in an ordering terminal at the first embodiment of the system to deliver the article to the recipient using the method to verify the recipient of the delivered article of the present invention;
Fig. 3 is a flowchart showing processes at an order receiving section in a controller of an EC server at the first embodiment of the system to deliver the article to the recipient using the method to verify the recipient of the delivered article of the present invention;
Fig. 4 is a flowchart showing processes at a transmitting destination deciding section in the controller of the EC server at the first embodiment of the system to deliver the article to the recipient using the method to verify the recipient of the delivered article of the present invention;
Fig. 5 is a flowchart showing processes at a fingerprint feature matching section in a person verifying terminal at the first embodiment of the system to deliver the article to the recipient using the method to verify the recipient of the delivered article of the present invention;
Fig. 6 is a flowchart showing processes at a verified information controlling section in the controller in the EC server at the first embodiment of the system to deliver the article to the recipient using the method to verify the recipient of the delivered article of the present invention;
Fig. 7 is a block diagram showing a structure of a second embodiment of the system to deliver the article to the recipient using the method to verify the recipient of the delivered article of the present invention;
Fig. 8 is a flowchart showing processes at a transmitting destination deciding section in a controller of an EC server at the second embodiment of the system to deliver the article to the recipient using the method to verify the recipient of the delivered article of the present invention;
Fig. 9 is a flowchart showing processes at a loading unit for person verifying portable terminal in a delivery station at the second embodiment of the system to deliver the article to the recipient using the method to verify the recipient of the delivered article of the present invention;
Fig. 10 is a flowchart showing processes at a fingerprint feature matching section in the person verifying portable terminal at the second embodiment of the system to deliver the article to the recipient using the method to verify the recipient of the delivered article of the present invention;
Fig. 11 is a flowchart showing processes at an upload unit in a delivery station at the second embodiment of the system to deliver the article to the recipient using the method to verify the recipient of the delivered article of the present invention;
Fig. 12 is a block diagram showing a structure of a third embodiment of the system to deliver the article to the recipient using the method to verify the recipient of the delivered article of the present invention;
Fig. 13 is a flowchart showing processes at a controller in a person verifying terminal at the third embodiment of the system to deliver the article to the recipient using the method to verify the recipient of the delivered article of the present invention;
Fig. 14 is a flowchart showing processes at a fingerprint feature matching section in an EC server at the third embodiment of the system to deliver the article to the recipient using the method to verify the recipient of the delivered article of the present invention;
Fig. 15 is a block diagram showing a structure of a fourth embodiment of the system to deliver the article to the recipient using the method to verify the recipient of the delivered article of the present invention; and
Fig. 16 is a flowchart showing processes at a fingerprint feature matching section in a person verifying terminal at the fourth embodiment of the system to deliver the article to the recipient using the method to verify the recipient of the delivered article of the present invention.

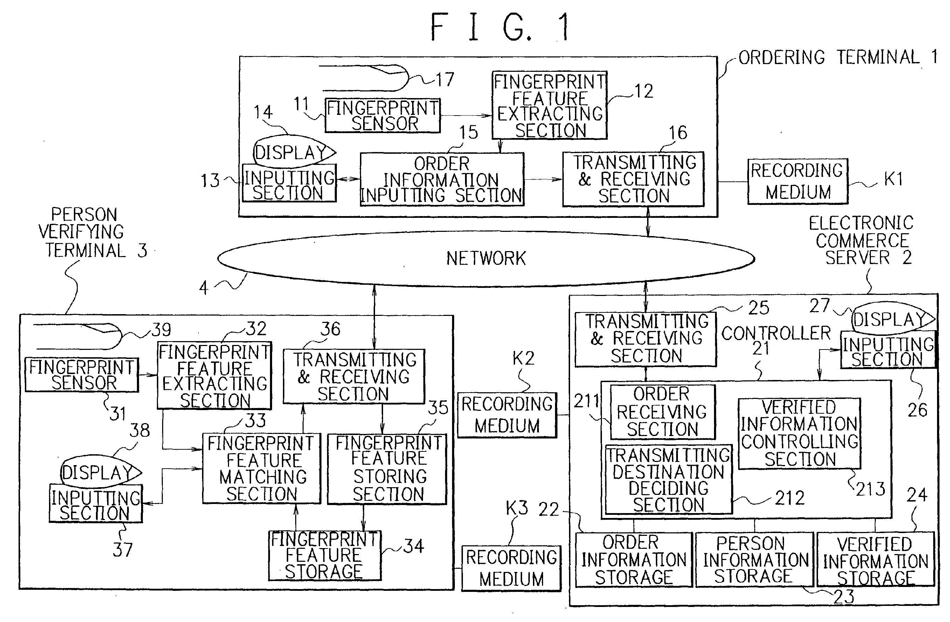

Referring now to the drawings, embodiments of the present invention are explained in detail. Fig. 1 is a block diagram showing a structure of a first embodiment of a system to deliver an article to a recipient using a method to verify the recipient of a delivered article of the present invention. As shown in Fig. 1, the first embodiment of the system to deliver the article to the recipient using the method to verify the recipient of the delivered article of the present invention consists of an ordering terminal 1, an electronic commerce (EC) server 2, and an person verifying terminal 3. And the ordering terminal 1, the EC server 2, and the person verifying terminal 3 are connected through a network 4 such as the Internet one another. In Fig. 1, the number of the ordering terminal 1 and the person verifying terminal 3 is one each, however, actually, plural ordering terminals 1 and plural person verifying terminals 3 are connected to the network 4.

At the first embodiment of the system to deliver the article to the recipient using the method to verify the recipient of the delivered article of the present invention, first, when a person makes an order for an article, the person transmits his/her own fingerprint feature from the ordering terminal 1 to the EC server 2 through the network 4, in addition to transmitting order information including the article number of the article, its destination (the delivering address of the article), the payment method, the price, and so on. The EC server 2 transmits the fingerprint feature of the person who made the order to the person verifying terminal 3 corresponding to the destination included in the order information in the plural person verifying terminals 3. And when the article is handed to a recipient at a shop, the fingerprint feature of the person who made the order transmitted from the EC server 2 is matched with the fingerprint feature of the recipient at the person verifying terminal 3 installed in the shop. With this, the recipient is verified as the person who made the order by using the fingerprint feature.

Next, each function of the first embodiment of the system to deliver the article to the recipient using the method to verify the recipient of the delivered article of the present invention is explained.

As shown in Fig. 1, the ordering terminal 1 is composed of such as a personal computer which the person who makes an order has, and further provides a fingerprint sensor 11, a fingerprint feature extracting section 12, an inputting section 13 such as a keyboard, a display 14 such as a CRT, an order information inputting section 15, a transmitting and receiving section 16, and a recording medium K1.

The fingerprint sensor 11 takes an image of a finger 17 of a person who makes an order by that the finger 17 is put on a designated position of the fingerprint sensor 11 and outputs the taken fingerprint image. The fingerprint feature extracting section 12 extracts a fingerprint feature such as the position of feature point and the direction of pattern of the fingerprint based on the fingerprint image outputted from the fingerprint sensor 11. In the Japanese Patent Publication No. SHO 63-13226 and the Japanese Patent Application Laid-Open No. HEI 4-33065, a technology, in which a fingerprint sensor and a fingerprint feature extracting section are used, is described.

The order information inputting section 15 makes the display 14 display an order inputting screen and receives order information inputted by a person using the order inputting screen. And the order information inputting section 15 transmits the received order information and the fingerprint feature extracted at the fingerprint feature extracting section 12 to the EC server 2 through the transmitting and receiving section 16 and the network 4. And further the order information inputting section 15 makes the display 14 display an order number transmitted from the EC server 2. The transmitting and receiving section 16 transmits and receives data through the network 4.

The recording medium K1 is a recording medium such as a disk, a semiconductor memory, and one of the other recording media, and stores a program which makes the ordering terminal 1 composed of the computer work as a part of a function of the system to deliver the article to the recipient. This program is read by the ordering terminal 1, and makes the fingerprint feature extracting section 12, the order information inputting section 15, and the transmitting and receiving section 16 realize on the ordering terminal 1 by controlling operation of the ordering terminal 1.

The EC server 2 provides a controller 21, order information storage 22, person information storage 23, verified information storage 24, a transmitting and receiving section 25, an inputting section 26 such as a keyboard, a display 27 such as a CRT, and a recording medium K2. The controller 21 provides an order receiving section 211, a transmitting destination deciding section 212, and a verified information controlling section 213.

The order receiving section 211 has a function that gives a unique order number to the order when a pair of the order information and the fingerprint feature of the person who made the order is transmitted from the ordering terminal 1, and a function that transmits the order number given to the order to the ordering terminal 1, and a function that makes the order information storage 22 store the pair of the order information and the order number, and also has a function that makes the person information storage 23 store the pair of the order number and the fingerprint feature.

The transmitting destination deciding section 212 has a function that searches the pair of the order number and the order information from the order information storage 22, and the pair of the order number and the fingerprint feature from the person information storage 23, by that the order number of the dispatched article is inputted from the inputting section 26. And further the transmitting destination deciding section 212 has a function that transmits the searched fingerprint feature, the searched order information, and the searched order number to the person verifying terminal 3 corresponding to the destination in the searched order information by using the transmitting and receiving section 25.

The verified information controlling section 213 has a function that makes the verified information storage 24 store verified information transmitted from the person verifying terminal 3. The transmitting and receiving section 25 has a function that transmits and receives data through the network 4.

The recording medium K2 is a recording medium such as a disk, a semiconductor memory, and one of the other recording media, and stores a program which makes the EC server 2 composed of a computer work as a part of a function of the system to deliver the article to the recipient. This program is read by the EC server 2 and makes the order receiving section 211, the transmitting destination deciding section 212, the verified information controlling section 213, and the transmitting and receiving section 25 realize on the EC server 2 by controlling operation of the EC server 2.

The person verifying terminal 3 is realized by a computer installed in a shop, and provides a fingerprint sensor 31, a fingerprint feature extracting section 32, a fingerprint feature matching section 33, fingerprint feature storage 34, a fingerprint feature storing section 35, a transmitting and receiving section 36, an inputting section 37 such as a keyboard, a display 38 such as a CRT, and a recording medium K3.

The fingerprint sensor 31 has the same function that the fingerprint sensor 11 has, and the fingerprint feature extracting section 32 has the same function that the fingerprint feature extracting section 12 has. The fingerprint feature storing section 35 has a function that makes the fingerprint feature storage 34 store a group of the fingerprint feature, the order number, the order information transmitted from the EC server 2.

The fingerprint feature matching section 33 has a function that searches the fingerprint feature corresponding to the order number inputted from the inputting section 37, from the fingerprint feature storage 34. And further, the fingerprint feature matching section 33 has a function that matches this searched fingerprint feature with the fingerprint feature of the recipient of the article outputted from the fingerprint feature extracting section 32, and makes the display 38 display the matched result. And when the matched result is equal, the verified information composed of the fingerprint feature and the order number is transmitted from the fingerprint feature matching section 33 to the EC server 2 through the transmitting and receiving section 36 and the network 4. The transmitting and receiving section 36 transmits and receives data through the network 4.

The recording medium K3 is a recording medium such as a disk, a semiconductor memory, and one of the other recording media, and stores a program which makes the person verifying terminal 3 composed of a computer work as a part of a function of the system to deliver the article to the recipient. This program is read by the person verifying terminal 3 and makes the fingerprint feature extracting section 32, the fingerprint feature matching section 33, the fingerprint feature storing section 35, and the transmitting and receiving section 36 on the person verifying terminal 3 realize by controlling operation of the person verifying terminal 3.

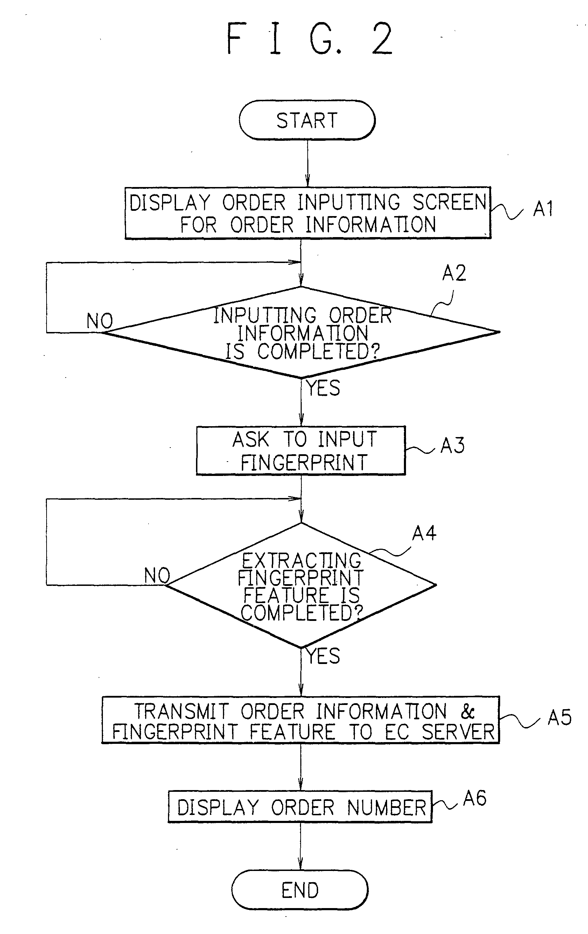

Next, operation of the first embodiment of the system to deliver the article to the recipient using the method to verify the recipient of the delivered article of the present invention is explained. Fig. 2 is a flowchart showing processes at the order information inputting section 15 in the ordering terminal 1 at the first embodiment of the system to deliver the article to the recipient using the method to verify the recipient of the delivered article of the present invention.

Referring to Figs. 1 and 2, the processes at the order information inputting section 15 in the ordering terminal 1 are explained. First, when a person makes an order for an article, the person starts up the order information inputting section 15 in the ordering terminal 1. The order information inputting section 15 makes the display 14 display an order inputting screen (step A1). A person who makes an order inputs the article number, the destination, the payment method, the price, and so on of the article, by using the order inputting screen.

When inputting the order information is completed (YES at step A2), the order information inputting section 15 makes the display 14 display a message such as " put a finger on a fingerprint sensor " (step A3). When the person who made the order looked this message puts his/her own finger 17 on a designated position of the fingerprint sensor 11, the fingerprint sensor 11 takes the fingerprint and outputs a fingerprint image. The fingerprint feature extracting section 12 extracts the fingerprint feature of the person who made the order by using the fingerprint image outputted from the fingerprint sensor 11, and outputs this extracted result to the order information inputting section 15 (step A4). Then, the order information inputting section 15 transmits a pair of the order information inputted by the person who made the order and the fingerprint feature of the person who made the order extracted at the fingerprint feature extracting section 12 to the EC server 2 by using the transmitting and receiving section 16 through the network 4 (step A5).

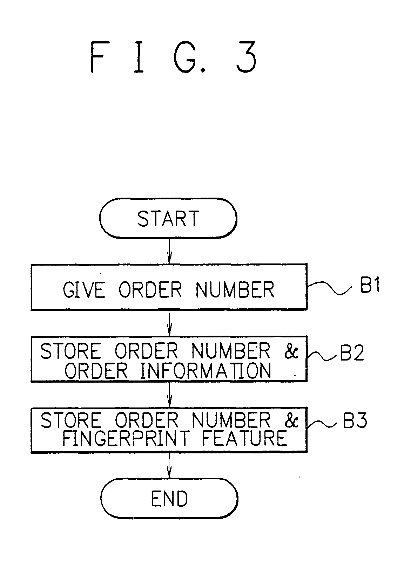

Fig. 3 is a flowchart showing processes at the order receiving section 211 in the controller 21 of the EC server 2 at the first embodiment of the system to deliver the article to the recipient using the method to verify the recipient of the delivered article of the present invention. Referring to Figs. 1 and 3, the processes at the order receiving section 211 are explained.

The pair of the fingerprint feature and the order information transmitted from the ordering terminal 1 is received at the transmitting and receiving section 25 in the EC server 2 and is inputted to the controller 21. The order receiving section 211 in the controller 21 gives a unique order number to the order transmitted from the ordering terminal 1 and also transmits the order number given to the order to the ordering terminal 1 (step B1). This order number is inputted to the order information inputting section 15 through the transmitting and receiving section 16 in the ordering terminal 1. The order information inputting section 15 makes the display 14 display this order number and makes the person who made the order know the order number (step A6 in Fig. 2). Next, the order receiving section 211 makes the order information storage 22 store the pair of the order number and the order information (step B2), and also makes the person information storage 23 store the order number and the fingerprint feature (step B3).

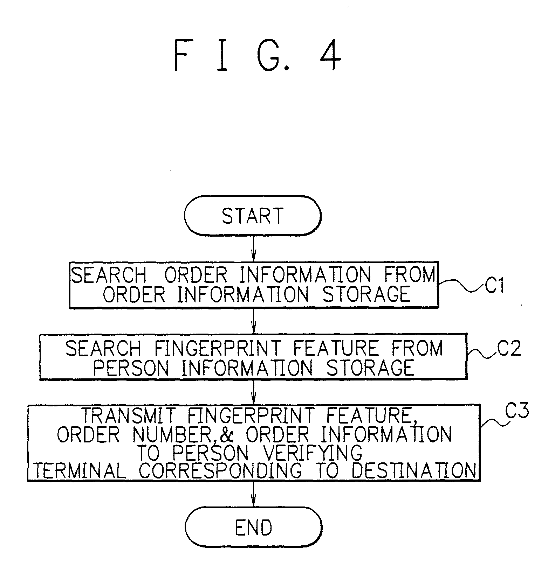

Fig. 4 is a flowchart showing processes at the transmitting destination deciding section 212 in the controller 21 of the EC server 2 at the first embodiment of the system to deliver the article to the recipient using the method to verify the recipient of the delivered article of the present invention. Referring to Figs. 1 and 4, the processes at the transmitting destination deciding section 212 are explained.

When dispatching the article ordered by the person who made the order is completed, an operator of the EC server 2 inputs the order number of the article to the inputting section 26. With this, the transmitting destination deciding section 212 in the controller 21 searches the order information paired with the order number from the order information storage 22 (step C1), and the fingerprint feature paired with the order number from the person information storage 23 (step C2). After this, the transmitting destination deciding section 212 obtains an address of the person verifying terminal 3 corresponding to the destination in the order information searched at the step C1, and transmits the fingerprint feature, the order number, and the order information to the address by using the transmitting and receiving section 25 (step C3). In this, the address of the person verifying terminal 3 corresponding to the destination of the article can be obtained by referring to a table in which the destination of the article and the address of the person verifying terminal 3 are stored in corresponding to each other.

The fingerprint feature, the order number, the order information transmitted from the EC server 2 are received at the transmitting and receiving section 36 in the person verifying terminal 3, and are outputted to the fingerprint feature storing section 35. With this, the fingerprint feature storing section 35 makes the fingerprint feature storage 34 store the fingerprint feature, the order number, and the order information in corresponding to one another.

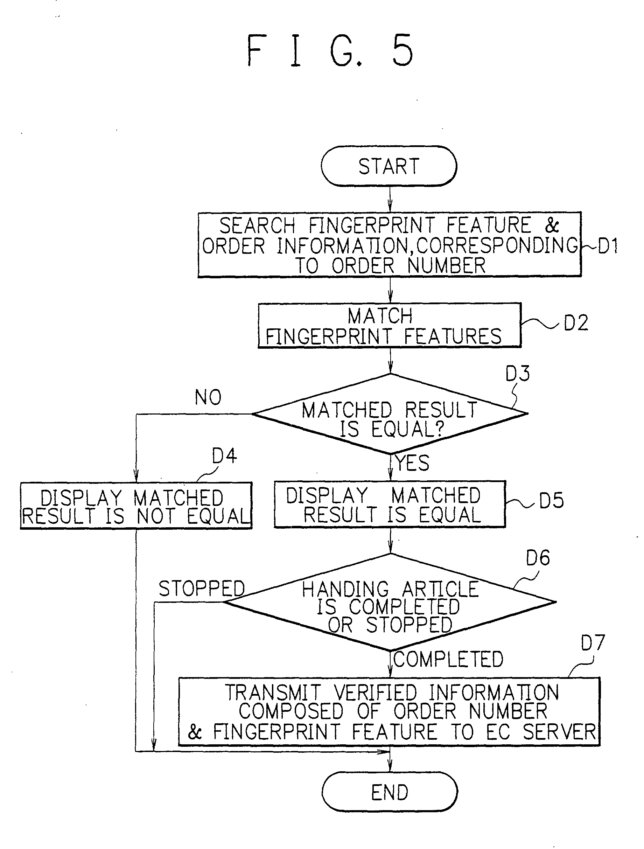

Fig. 5 is a flowchart showing processes at the fingerprint feature matching section 33 in the person verifying terminal 3 at the first embodiment of the system to deliver the article to the recipient using the method to verify the recipient of the delivered article of the present invention. Referring to Figs. 1 and 5, the processes at the fingerprint feature matching section 33 are explained.

When a recipient requires that the article is handed to the recipient who visited the shop, a sales clerk (article handing person) asks the recipient about the order number, and inputs the order number to the inputting section 37. And the fingerprint feature matching section 33 searches the fingerprint feature and the order information corresponding to the order number from the fingerprint feature storage 34 and makes the display 38 display the searched order information (step D1). In this, displaying the order information is for the sales clerk to know about whether the price is paid at the time of handing the article or not, and the price itself.

After this, the sales clerk asks the recipient to put a finger 39 on a designated position of the fingerprint sensor 31. The fingerprint sensor 31 takes the fingerprint of the finger 39 put on the designated position and outputs a fingerprint image. The fingerprint feature extracting section 32 extracts the fingerprint feature of the recipient by using the fingerprint image and outputs the extracted fingerprint feature to the fingerprint feature matching section 33.

The fingerprint feature matching section 33 matches the fingerprint feature of the recipient outputted from the fingerprint feature extracting section 32 with the fingerprint feature of the person who made the order searched at the step D1 (step D2).

And at the case that the matched result is not equal (NO at step D3), the fingerprint feature matching section 33 makes the display 38 display that the matched result is not equal (step D4). And the sales clerk looked this display refuses to hand the article to the recipient, or asks the recipient to put the finger 39 again on the designated position of the fingerprint sensor 31.

And at the case that the matched result is equal (YES at the step D3), the fingerprint feature matching section 33 makes the display 38 display that the matched result is equal (step D5). The sales clerk looked this display hands the article to the recipient, if necessary, receives the money for the article. After this, the sales clerk (article handing person) inputs that handing the article is completed to the fingerprint feature matching section 33 by using the inputting section 37 (step D6). In this, for example, when handing the article is stopped because the money is short, the sales clerk also inputs this to the inputting section 37. When it is judged that the handing the article is completed at the step D6, the fingerprint feature matching section 33 transmits verified information composed of the fingerprint feature of the recipient and the order number to the EC server 2 by using the transmitting and receiving section 36 (step D7). When it is judged that the handing the article is stopped at the step D6, the processes end.

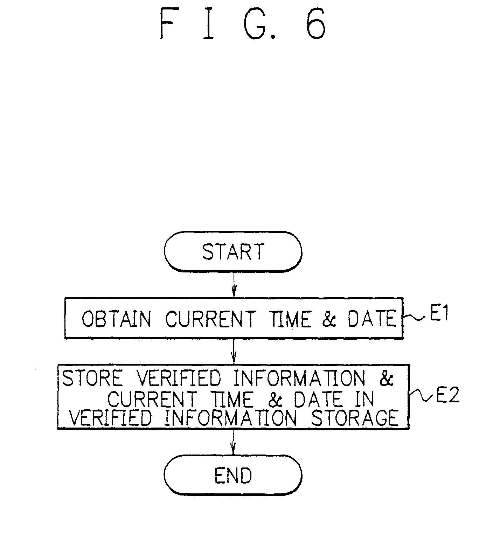

Fig.6 is a flowchart showing processes at the verified information controlling section 213 in the controller 21 in the EC server 2 at the first embodiment of the system to deliver the article to the recipient using the method to verify the recipient of the delivered article of the present invention. Referring to Figs. 1 and 6, the processes at the verified information controlling section 213 are explained.

The verified information transmitted to the EC server 2 is received at the transmitting and receiving section 25 and is outputted to the controller 21. The verified information controlling section 213 in the controller 21 obtains the current time and date (step E1) and makes the verified information storage 24 store the verified information with the current time and date (step E2).

At the first embodiment of the present invention, encrypting the transmitting data is not described. However, when the communication is executed through the network 4, in order to secure its security, a general security method, such as, the contents of the communication are encrypted, is surely applied.

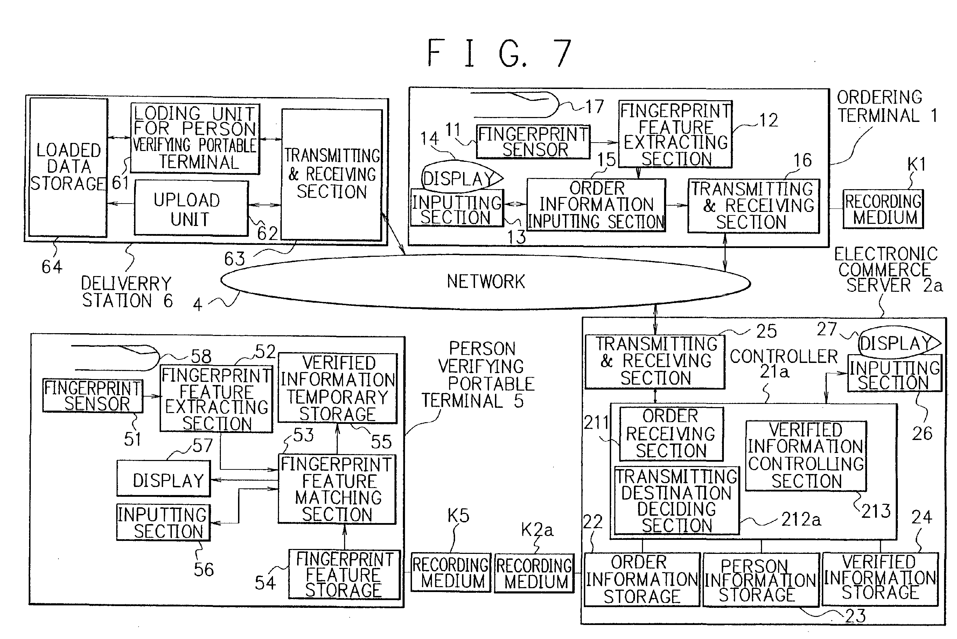

Next, a second embodiment of the system to deliver the article to the recipient using the method to verify the recipient of the delivered article of the present invention is explained. Fig. 7 is a block diagram showing a structure of the second embodiment of the system to deliver the article to the recipient using the method to verify the recipient of the delivered article of the present invention. As shown in Fig. 7, the second embodiment of the system to deliver the article to the recipient using the method to verify the recipient of the delivered article of the present invention consists of an ordering terminal 1, an EC server 2a, a delivery station 6, and an person verifying portable terminal 5 which is carried by a delivery person. The ordering terminal 1, the EC server 2a, and the delivery station 6 are connected through a network 4. In Fig. 7, the number of the ordering terminal 1, the person verifying portable terminal 5, and the delivery station 6 is one each, however, actually, the number is plural.

At the second embodiment of the system to deliver the article to the recipient using the method to verify the recipient of the delivered article of the present invention, first, when a person makes an order for an article, the person transmits his/her own fingerprint feature from the ordering terminal 1 to the EC server 2a through the network 4, in addition to transmitting order information including the article number of the article, the destination, the payment method, the price, and so on. The EC server 2a transmits the fingerprint feature of the person who made the order to the delivery station 6 corresponding to the destination of the order information in the plural delivery stations. And the delivery station 6 loads the fingerprint feature of the person who made the order on the person verifying portable terminal 5 carrying by the delivery person. When the delivery person hands the article to a recipient, the fingerprint feature of the person who made the order loaded from the delivery station 6 is matched with the fingerprint feature of the recipient at the person verifying portable terminal 5 carrying by the delivery person. With this, the recipient is verified to be the person who made the order by using the fingerprint features.

Next, each function of the second embodiment of the system to deliver the article to the recipient using the method to verify the recipient of the delivered article of the present invention is explained.

As shown in Fig. 7, the ordering terminal 1 has the same structure and functions that the first embodiment has. Therefore, the explanation of the ordering terminal 1 is omitted.

The EC server 2a has almost the same structure that the EC server 2 shown in Fig. 1 has, however, the EC server 2a provides controller 21a instead of the controller 21, a transmitting destination deciding section 212a instead of the transmitting destination deciding section 212, and a recording medium K2a instead of the recording medium K2, compared with the EC server 2 at the first embodiment.

The transmitting destination deciding section 212a has a function that searches the pair of the order number and the order information from the order information storage 22, and the pair of the order number and the fingerprint feature from the person information storage 23 by that the order number of the dispatched article is inputted from the inputting section 26. And further the transmitting destination deciding section 212a has a function that transmits the searched fingerprint feature, the searched order information, and the searched order number to the delivery station 6 corresponding to the destination in the searched order information by using the transmitting and receiving section 25.

The recording medium K2a is a recording medium such as a disk, a semiconductor memory, and one of the other recording media, and stores a program which makes the EC server 2a composed of a computer work as a part of a function of the system to deliver the article to the recipient. This program is read by the EC server 2a and makes the order receiving section 211, the transmitting destination deciding section 212a, the verified information controlling section 213, and the transmitting and receiving section 25 realize on the EC server 2a by controlling operation of the EC server 2a.

The person verifying portable terminal 5 consists of a fingerprint sensor 51, a fingerprint feature extracting section 52, a fingerprint feature matching section 53, fingerprint feature storage 54, verified information temporary storage 55, an inputting section 56 such as a keyboard, a display 57 such as a CRT, and a recording medium K5.

The fingerprint sensor 51 and the fingerprint feature extracting section 52 have the same respective functions that the fingerprint sensor 31 and the fingerprint feature extracting section 32 shown in Fig. 1 have.

The fingerprint feature matching section 53 has a function that searches the fingerprint feature corresponding to the order number inputted from the inputting section 56, from the fingerprint feature storage 54. And further, the fingerprint feature matching section 53 has a function that matches this searched fingerprint feature with the fingerprint feature of the recipient of the article outputted from the fingerprint feature extracting section 52, and makes the matched result display on the display 57. And when the matched result is equal, verified information composed of the fingerprint feature of the recipient and the order number is stored temporarily in the verified information temporary storage 55.

In the fingerprint feature storage 54, the order number, the order information, and the fingerprint feature of the person who made the order for each article, which the delivery person who carries the person verifying portable terminal 5 delivers, are stored. This information is loaded on the fingerprint feature storage 54 by a loading unit for person verifying portable terminal 61 in the delivery station 6. The delivery station 6 and the loading unit for person verifying portable terminal 61 are explained in detail later.

The recording medium K5 is a recording medium such as a disk, a semiconductor memory, and one of the other recording media, and stores a program which makes the person verifying portable terminal 5 composed of a computer work as a part of a function of the system to deliver the article to the recipient. This program is read by the person verifying portable terminal 5 and makes the fingerprint feature extracting section 52 and the fingerprint feature matching section 53 on the person verifying portable terminal 5 by controlling operation of the person verifying portable terminal 5.

The delivery station 6 provides the loading unit for person verifying portable terminal 61, an upload unit 62, a transmitting and receiving section 63, and loaded data storage 64. These functions are realized in a computer (not shown) for the delivery station 6. The computer for the delivery station 6 reads a program stored in a recording medium such as a disk, a semiconductor memory, and one of the other recording media. And the computer for the delivery station 6 realizes the loading unit for person verifying portable terminal 61, the upload unit 62, the transmitting and receiving section 63, by controlling operation of the computer for the delivery station 6 by using the read program.

The loading unit for person verifying portable terminal 61 makes the loaded data storage 64 store a group of the order number, the order information, and the fingerprint feature, transmitted from the EC sever 2a. And when the person verifying portable terminal 5 is connected to the delivery station 6, and an order number list of articles, which the delivery person carrying the person verifying portable terminal 5 delivers, is inputted, the loading unit for person verifying portable terminal 61 searches the loaded data storage 64 by that each order number described in the order number list is made to be a key. And the loading unit for person verifying portable terminal 61 makes the searched data load on the fingerprint feature storage 54 in the person verifying portable terminal 5 connected to the delivery station 6 by the connecting cable.

The upload unit 62 transmits verified information, stored in the verified information temporary storage 55 in the person verifying portable terminal 5 that is connected to the delivery station 6 by the connecting cable, to the EC server 2a. The transmitting and receiving section 63 transmits and receives data through the network 4.

Next, operation of the second embodiment of the system to deliver the article to the recipient using the method to verify the recipient of the delivered article of the present invention is explained.

First, when a person makes an order for an article, the person executes the same operation executed at the first embodiment by using the ordering terminal 1. By this operation, order information and the fingerprint feature of the person who made the order are transmitted from the ordering terminal 1 to the EC server 2a.

The order information and the fingerprint feature are received at the transmitting and receiving section 25 in the EC server 2a, and inputted to the controller 21a. And the order receiving section 211 executes the processes shown at the steps B1 to B3 in the flowchart shown in Fig. 3. Consequently, the order number for the order executed at this time is returned to the ordering terminal 1, and a pair of the order number and the order information is stored in the order information storage 22. And further a pair of the order number and the fingerprint feature of the person who made the order is stored in the person information storage 23.

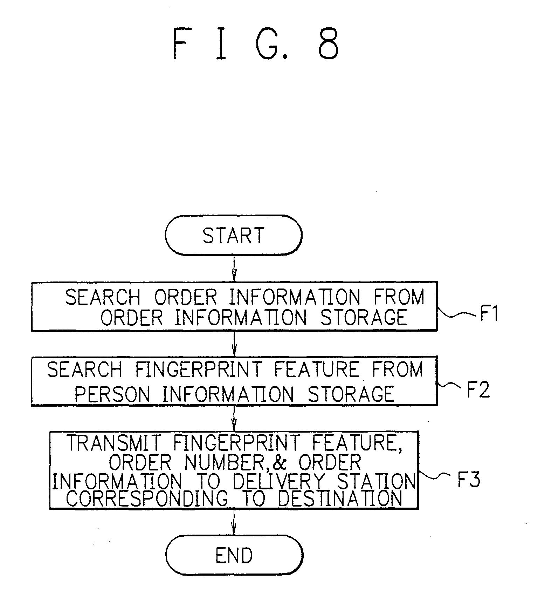

Fig. 8 is a flowchart showing processes at the transmitting destination deciding section 212a in the controller 21a of the EC server 2a at the second embodiment of the system to deliver the article to the recipient using the method to verify the recipient of the delivered article of the present invention. Referring to Figs. 7 and 8, processes at the transmitting destination deciding section 212a is explained.

When the order number of a dispatched article is inputted to the inputting section 26, the transmitting destination deciding section 212a searches the order information stored with the order number in the order information storage 22 and obtains the order information (step F1) by that the order number is made to be a key. And further the transmitting destination deciding section 212a searches the fingerprint feature stored with the order number in the person information storage 23 and obtains the fingerprint feature (step F2) by that the order number is made to be a key. After this, the transmitting destination deciding section 212a transmits the order number, the order information, and the fingerprint feature to the delivery station 6 corresponding to the destination in plural delivery stations (step F3).

The loading unit for person verifying portable terminal 61 in the delivery station 6 makes the loaded data storage 64 store the group of the order number, the order information, and the fingerprint feature, which are transmitted from the EC server 2a and received at the transmitting and receiving section 63.

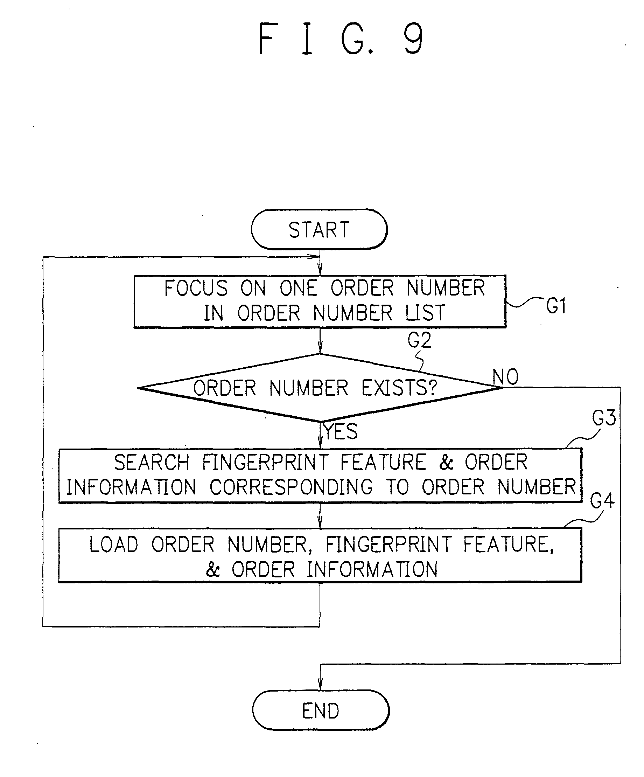

Fig. 9 is a flowchart showing processes at the loading unit for person verifying portable terminal 61 in the delivery station 6 at the second embodiment of the system to deliver the article to the recipient using the method to verify the recipient of the delivered article of the present invention. Referring to Figs. 7 and 9, processes at the loading unit for person verifying portable terminal 61 are explained.

When the person verifying portable terminal 5 is connected to the delivery station 6 by such as a connecting cable, and an order number list, in which order numbers of all articles that are handled by a delivery person carrying the person verifying portable terminal 5 are described, is inputted to the loading unit for person verifying portable terminal 61, the loading unit for person verifying portable terminal 61 executes processes shown in Fig. 9.

First, one order number in the order number list is focused on (step G1). When the focused order number exists (YES at step G2), the fingerprint feature and the order information stored with the focused order number are searched from the loaded data storage 64 (step G3). After this, the searched fingerprint feature, the searched order information, and the focused order number are loaded on the fingerprint feature storage 54 in the person verifying portable terminal 5 connecting to the delivery station 6 (step G4). The processes mentioned above are repeated until focused order numbers in the order number list are all processed, that is, until the step G2 becomes NO.

The delivery person deliveries articles by carrying the person verifying portable terminal 5 in which the order number, the order information, and the fingerprint feature of the person who made the order of each article to be delivered are stored in the fingerprint feature storage 54.

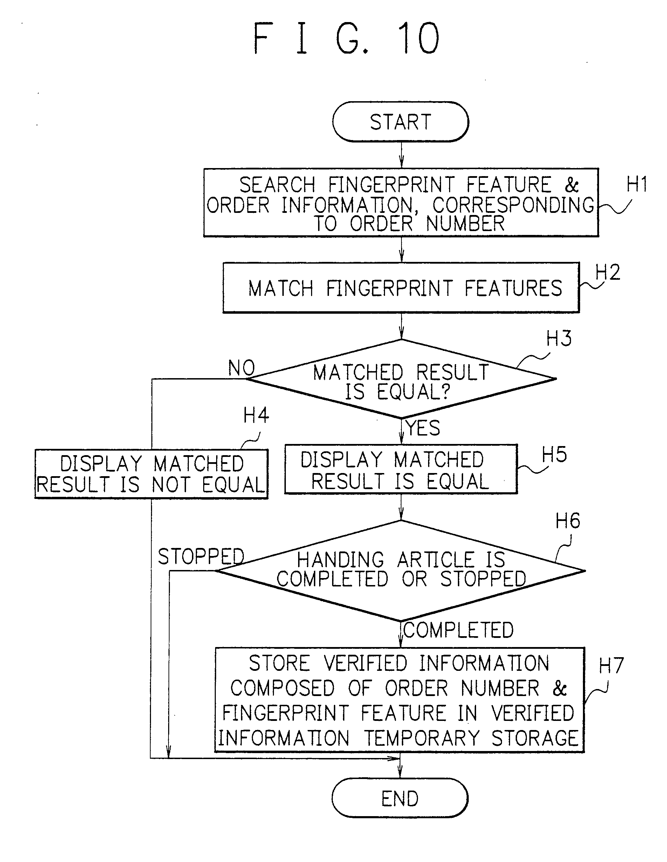

Fig. 10 is a flowchart showing processes at the fingerprint feature matching section 53 in the person verifying portable terminal 5 at the second embodiment of the system to deliver the article to the recipient using the method to verify the recipient of the delivered article of the present invention. Referring to Figs. 7 and 10, processes at the fingerprint feature matching section 53 is explained.

When the article is delivered to a recipient, the delivery person asks the recipient about the order number and inputs the order number to the inputting section 56. The fingerprint feature matching section 53 searches the fingerprint feature and the order information corresponding to the order number from the fingerprint feature storage 54, and makes the display 57 display the searched order information (step H1).

After this, the delivery person asks the recipient to put the finger 58 on a designated position on the fingerprint sensor 51. The fingerprint sensor 51 takes an image of the finger 58 and outputs a fingerprint image. The fingerprint feature extracting section 52 extracts the fingerprint feature of the recipient by using the fingerprint image and outputs the extracted fingerprint feature to the fingerprint feature matching section 53.

The fingerprint feature matching section 53 matches the fingerprint feature of the recipient outputted from the fingerprint feature extracting section 52 with the fingerprint feature of the person who made the order searched at the step H1 (step H2).

And at the case that the matched result is not equal (NO at step H3), the fingerprint feature matching section 53 makes the display 57 display that the matched result is not equal (step H4). And the delivery person looked this display refuses to hand the article to the recipient, or asks the recipient to put the finger 58 again on the designated position of the fingerprint sensor 51.

And at the case that the matched result is equal (YES at the step H3), the fingerprint feature matching section 53 makes the display 57 display that the matched result is equal (step H5). The delivery person looked this display, hands the article to the recipient, if necessary, receives the money for the article. After this, the delivery person inputs that handing the article is completed to the inputting section 56 (step H6). In this, for example, when handing the article is stopped because the money is short, the delivery person also inputs this to the inputting section 56. When it is judged that the handing the article is completed at the step H6, the fingerprint feature matching section 53 makes the verified information temporary storage 55 store verified information, composed of the fingerprint feature of the recipient and the order number (step H7). When it is judged that the handing the article is stopped at the step H6, the processes end.

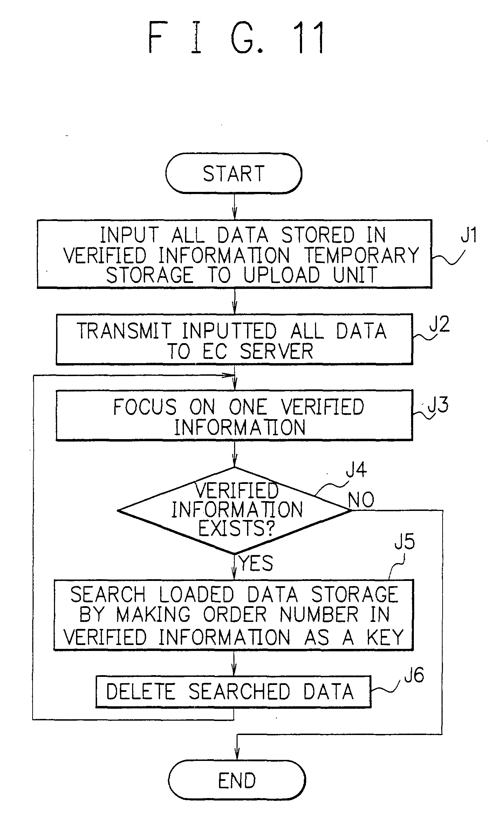

Fig. 11 is a flowchart showing processes at the upload unit 62 in the delivery station 6 at the second embodiment of the system to deliver the article to the recipient using the method to verify the recipient of the delivered article of the present invention. Referring to Figs. 7 and 11, processes at the upload unit 62 is explained.

When handing the article is completed, the delivery person returns to the delivery station 6 and connects the person verifying portable terminal 5 to the upload unit 62 by using such as a connecting cable, and starts up the upload unit 62.

With this connection, all of the verified information stored in the verified information temporary storage 55 in the person verifying portable terminal 5 are inputted to the upload unit 62 (step J1), and the upload unit 62 transmits all the verified information to the EC server 2a through the transmitting and receiving section 63 and the network 4 (step J2). After this, one of the verified information inputted at the step J1 is focused on (step J3), and when the verified information exists (YES at step J4), the upload unit 62 searches the loaded data storage 64 by that the order number in the focused verified information is made to be a key (step J5). And a group of the order number including the focused order number, the order information, and the fingerprint feature is searched, and the upload unit 62 makes the loaded data storage 64 deletes the group (step J6). The processes from the step J3 to the step J6 are repeated until all of the verified information are processed, that is, until the step J4 becomes NO.

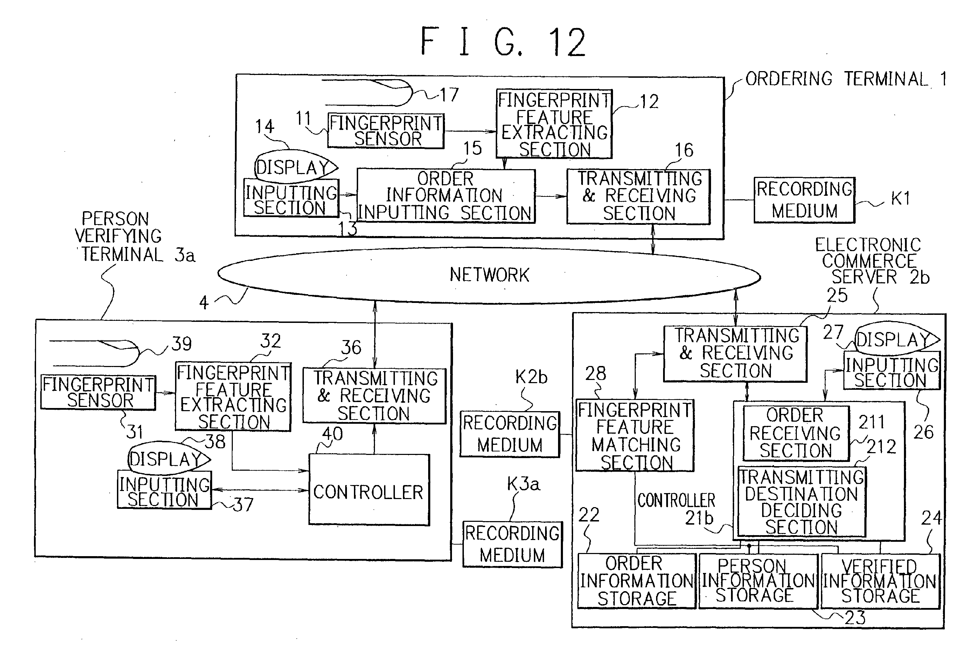

Next, a third embodiment of the system to deliver the article to the recipient using the method to verify the recipient of the delivered article of the present invention is explained. Fig. 12 is a block diagram showing a structure of the third embodiment of the system to deliver the article to the recipient using the method to verify the recipient of the delivered article of the present invention. As shown in Fig. 12, the third embodiment of the system to deliver the article to the recipient using the method to verify the recipient of the delivered article of the present invention consists of an ordering terminal 1, an EC server 2b, and an person verifying terminal 3a. The ordering terminal 1, the EC server 2b, and the person verifying terminal 3a are connected through a network 4. In Fig. 12, the number of the ordering terminal 1, the person verifying terminal 3a is one each, however, actually, the number is plural.

At the third embodiment of the present invention, the fingerprint feature of the person who made the order is stored in the EC server 2b, and when the article is delivered to a recipient, the fingerprint feature of the recipient is transmitted to the EC server 2b from the person verifying terminal 3a, and the fingerprint feature of the person who made the order is matched with the fingerprint feature of the recipient at the EC server 2b. With this matching, the person who made the order is verified.

Next, each function of the third embodiment of the present invention is explained in detail. The ordering terminal 1 has the same structure and functions that the ordering terminal 1 shown in Fig. 1 has. The EC server 2b newly provides a fingerprint feature matching section 28, and provides a controller 21b instead of the controller 21, and a recording medium K2b instead of the recording medium K2, compared with the EC server 2 at the first embodiment shown in Fig. 1. And the controller 21b does not provide the verified information controlling section 213 that the controller 21 shown in Fig. 1 has.

The fingerprint feature matching section 28 matches the fingerprint feature of the recipient transmitted from the person verifying terminal 3a with the fingerprint feature of the person who made the order stored in the person information storage 23, and returns the matched result to the person verifying terminal 3a, and makes the verified information storage 24 store the verified information.

The recording medium K2b is a recording medium such as a disk, a semiconductor memory, and one of the other recording media, and stores a program which makes the EC server 2b composed of a computer work as a part of a function of the system to deliver the article to the recipient. This program is read by the EC server 2b and makes the order receiving section 211, the transmitting destination deciding section 212, the transmitting and receiving section 25, and the fingerprint feature matching section 28 realize on the EC server 2b by controlling operation of the EC server 2a.

The person verifying terminal 3a consists of a fingerprint sensor 31, a fingerprint feature extracting section 32, a transmitting and receiving section 36, an inputting section 37, a display 38, a controller 40, and a recording medium K3a.

The controller 40 transmits the order number inputted from the inputting section 37 and the fingerprint feature of the recipient extracted at the fingerprint feature extracting section 32 to the EC server 2b through the transmitting and receiving section 36 and the network 4. And the controller 40 makes the display 38 display the matched result of the fingerprint features transmitted from the EC server 2b. And further the controller 40 transmits completion notice signifying that handing the article to the recipient is completed, or stopping notice signifying that the handing the article to the recipient is stopped to the EC server 2b, based on the instruction of the delivery person.

The recording medium K3a is a recording medium such as a disk, a semiconductor memory, and one of the other recording media, and stores a program which makes the person verifying terminal 3a composed of a computer work as a part of a function of the system to deliver the article to the recipient. This program is read by the person verifying terminal 3a and makes the fingerprint feature extracting section 32 and the controller 40 realize on the person verifying terminal 3a by controlling operation of the person verifying terminal 3a.

Next, operation of the third embodiment of the system to deliver the article to the recipient of the present invention is explained. In this, operation at the time when an article is ordered is the same that the operation of the first embodiment has, therefore, at the third embodiment, only operation at the time when the article is delivered is explained.

When a recipient of the article requires that the article is handed to the recipient, the delivery person asks the recipient about the order number and inputs the order number to the inputting section 37. After this, the delivery person asks the recipient to put his/her finger 39 on a designated position on the fingerprint sensor 31. The fingerprint sensor 31 outputs the fingerprint image of his/her finger 39, and the fingerprint feature extracting section 32 outputs the fingerprint feature of the recipient.

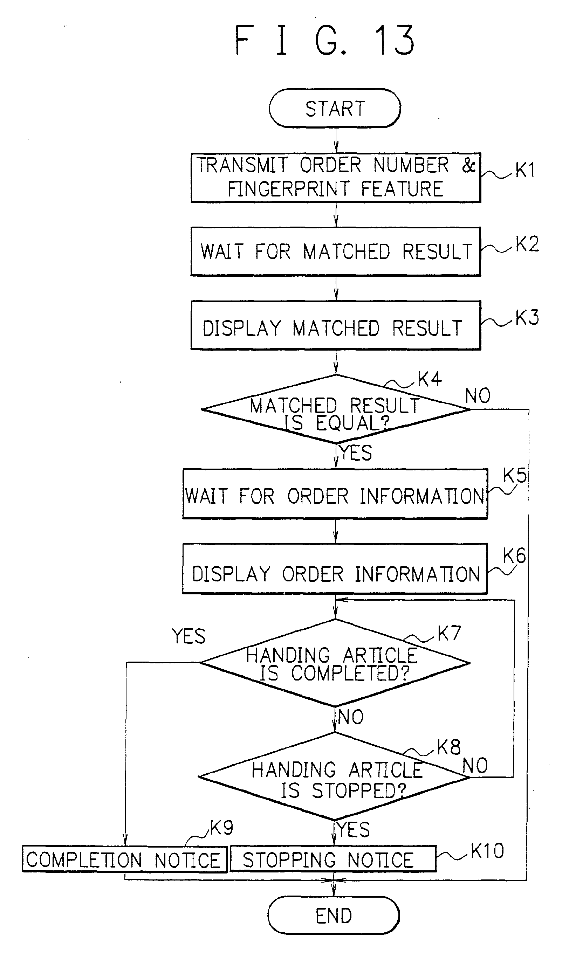

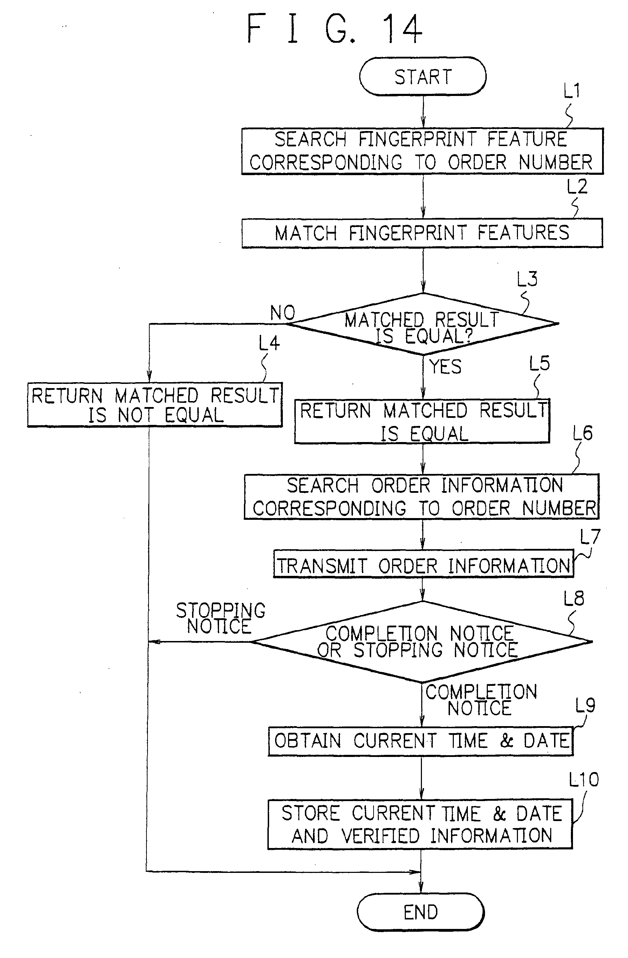

Fig. 13 is a flowchart showing processes at the controller 40 in the person verifying terminal 3a at the third embodiment of the system to deliver the article to the recipient using the method to verify the recipient of the delivered article of the present invention. Fig. 14 is a flowchart showing processes at the fingerprint feature matching section 28 in the EC server 2b at the third embodiment of the system to deliver the article to the recipient using the method to verify the recipient of the delivered article of the present invention. Referring to Figs. 12 to 14 processes at the controller 40 is explained.

When the order number from the inputting section 37 and the fingerprint feature of the recipient from the fingerprint feature extracting section 32 are inputted to the controller 40, the controller 40 makes these inputted data a pair and transmits the pair to the EC server 2b (step K1). And the controller 40 waits for the matched result to return (step K2).

The transmitting and receiving section 25 in the EC server 2b receives the pair of the fingerprint feature of the recipient and the order number transmitted from the person verifying terminal 3a, and outputs the pair to the fingerprint feature matching section 28.

The fingerprint feature matching section 28 searches the person information storage 23, and obtains the fingerprint feature of the person who made the order which is stored as a pair with the order number that is included in the pair transmitted from the person verifying terminal 3a (step L1). After this, the fingerprint feature matching section 28 matches the fingerprint feature of the person who made the order obtained at the step L1 with the fingerprint feature of the recipient in the pair transmitted from the person verifying terminal 3a (step L2).

At the case that the matched result is not equal (NO at step L3), that the matched result is not equal is returned to the person verifying terminal 3a (step L4). When the controller 40 in the person verifying terminal 3a, which is in a waiting state for the matched result, receives that the matched result is not equal, the controller 40 makes the display 38 display that the matched result is not equal (step K3). And the controller 40 stops the processes (NO at step K4).

At the case that the matched result is equal (YES at the step L3), the fingerprint feature matching section 28 returns information that the matched result is equal to the person verifying terminal 3a (step L5). After this, the order information storage 22 is searched and the order information corresponding to the order number is obtained (step L6) and the obtained order information is transmitted to the person verifying terminal 3a (step L7). After this, the fingerprint feature matching section 28 waits for the person verifying terminal 3a to inform completion notice or stopping notice (step L8).

When the controller 40 in the person verifying terminal 3a, which is in the waiting state for the matched result, receives that the matched result is equal, the controller 40 makes the display 38 display that the matched result is equal (the step K3). After this, the controller 40 waits for the order information to transmit (step K5), and when the order information is transmitted, the controller 40 makes the display 38 display the order information (step K6).

When it is displayed that the matched result is equal on the display 38, the delivery person hands the article to the recipient. At this time, when it is judged that the money for the article must be received, based on the order information displayed on the display 38, the delivery person receives the money. After this, the delivery person inputs the completion of handing to the inputting section 37. In this, for example, when the handing the article is stopped because the money is short, the delivery person inputs the stopping of handing to the inputting section 37.

At the case that the completion of handing is inputted (YES at step K7), the controller 40 transmits the completion notice to the EC server 2b (step K9). And at the case that the stopping of handing is inputted (NO at the step K7, and YES at step K8), the controller 40 transmits the stopping notice to the EC server 2b (step K10).

When the stopping notice is transmitted, the fingerprint feature matching section 28 in the EC server 2b ends its process. And when the completion notice is transmitted, the fingerprint feature matching section 28 in the EC server 2b obtains the current time and date (step L9). And the fingerprint feature matching section 28 stores this current time and date and verified information, that is, the fingerprint feature of the recipient transmitted from the person verifying terminal 3a and the order number, in the verified information storage 24 (step L10).

At the second embodiment shown in Fig. 7, in which the delivery person hands the article to the recipient, its structure can be changed to the structure that the third embodiment has, that is, the EC server 2a executes matching fingerprint features by installing the fingerprint feature matching section in the EC server 2a and transmits the matched result to the person verifying portable terminal 5 that does not have the fingerprint feature matching section. In this case, the order number and the fingerprint feature of the recipient are transmitted to the EC server 2a from the person verifying portable terminal 5 by using such as a wireless network, and the EC server 2a transmits the matched result of the fingerprint features to the person verifying portable terminal 5 by using the wireless network. Further, at the third embodiment, fingerprint information of the person who made the order is not transmitted to a shop or a delivery person, therefore, the high security can be realized. And the fingerprint feature matching section is not required to set in the person verifying terminal, consequently, the cost can be saved.

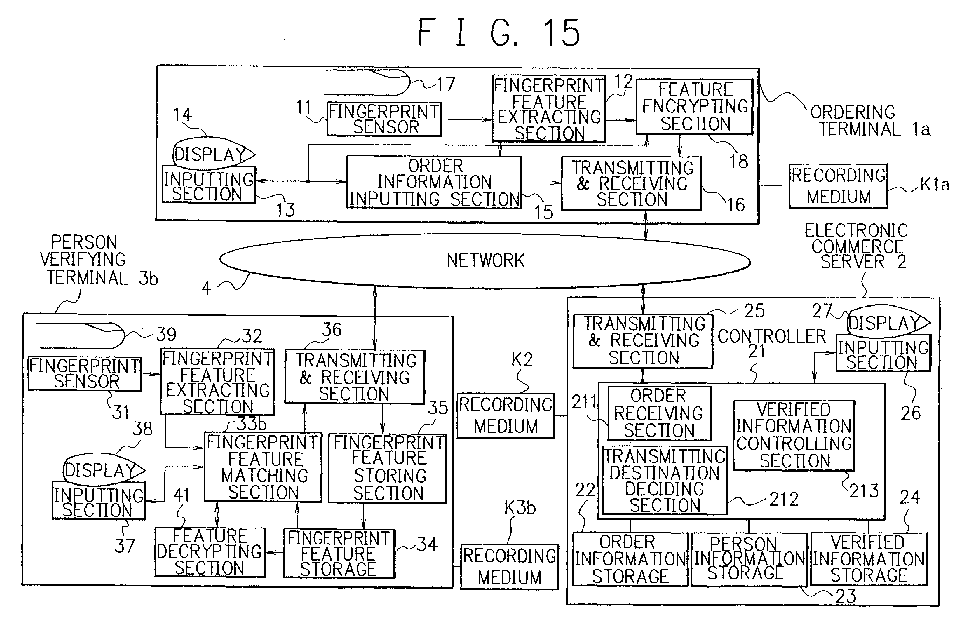

Next, a fourth embodiment of the system to deliver the article to the recipient using the method to verify the recipient of the delivered article of the present invention is explained. Fig. 15 is a block diagram showing a structure of the fourth embodiment of the system to deliver the article to the recipient using the method to verify the recipient of the delivered article of the present invention. As shown in Fig. 15, the fourth embodiment of the system to deliver the article to the recipient using the method to verify the recipient of the delivered article of the present invention consists of an ordering terminal 1a, an EC server 2, and an person verifying terminal 3b. The ordering terminal 1a, the EC server 2, and the person verifying terminal 3b are connected through a network 4. In Fig. 15, the number of the ordering terminal 1a, the person verifying terminal 3b is one each, however, actually, the number is plural.

At the fourth embodiment of the system to deliver the article to the recipient of the present invention, at the time when a person makes an order for an article, the ordering terminal 1a encrypts the fingerprint feature of the person who made the order by using a secret code designated by the person who made the order, and transmits the encrypted fingerprint feature to the EC server 2. The EC server 2 transmits the encrypted fingerprint feature to the person verifying terminal 3b. And when the article is handed to a recipient, at the person verifying terminal 3b, the encrypted fingerprint feature of the person who made the order is decrypted by a secret code designated by the recipient. And the decrypted fingerprint feature of the person who made the order is matched with the fingerprint feature of the recipient, with this, the person who made the order is verified.

Next, each function of the fourth embodiment of the present invention is explained in detail. The ordering terminal 1a newly provides a feature encrypting section 18 and provides a recording medium K1a instead of the K1 compared with the ordering terminal 1 shown in Fig. 1. The feature encrypting section 18 encrypts the fingerprint feature of the person who made the order extracted at the fingerprint feature extracting section 12 by using a secret code (for example, personal identification number). In this, as a cryptosystem, for example, a secret-key cryptosystem such as a data encryption standard (DES) can be used.

The recording medium K1a is a recording medium such as a disk, a semiconductor memory, and one of the other recording media, and stores a program which makes the ordering terminal 1a composed of a computer work as a part of a function of the system to deliver the article to the recipient. This program is read by the ordering terminal 1a and makes the fingerprint feature extracting section 12, the order information inputting section 15, the transmitting and receiving section 16, and the feature encrypting section 18 realize on the ordering terminal 1a by controlling operation of the ordering terminal 1a.

The EC server 2 has the same structure and functions that the EC server 2 shown in Fig. 1 at the first embodiment has.

The person verifying terminal 3b newly provides a feature decrypting section 41, and provides a fingerprint feature matching section 33b instead of the fingerprint feature matching section 33 compared with the person verifying terminal 3 at the first embodiment shown in Fig.1.

The fingerprint feature matching section 33b searches the encrypted fingerprint feature of the person who made the order corresponding to the order number inputted from the inputting section 37, from the fingerprint feature storage 34. Further, the fingerprint feature matching section 33b outputs this searched encrypted fingerprint feature and a secret code inputted from the inputting section 37 to the feature decrypting section 41, and makes the feature decrypting section 41 decrypt the encrypted fingerprint feature. And the fingerprint feature matching section 33b matches the decrypted fingerprint feature of the person who made the order with the fingerprint feature of the recipient. And when the matched result is equal, the fingerprint feature matching section 33b transmits the verified information composed of the fingerprint feature of the recipient and the order number to the EC server 2.

The feature decrypting section 41 makes the encrypted fingerprint feature outputted from the fingerprint feature matching section 33b decrypt by using the secret code outputted from the fingerprint feature matching section 33b, and returns the decrypted fingerprint feature to the fingerprint feature matching section 33b.

The recording medium K3b is a recording medium such as a disk, a semiconductor memory, and one of the other recording media, and stores a program which makes the person verifying terminal 3b composed of a computer work as a part of a function of the system to deliver the article to the recipient. This program is read by the person verifying terminal 3b and makes the fingerprint feature extracting section 32, the fingerprint feature matching section 33b, the fingerprint feature storing section 35, the transmitting and receiving section 36, and the feature decrypting section 41 realize on the person verifying terminal 3b by controlling operation of the person verifying terminal 3b.

At the time when a person makes an order for an article, by using the same processes used at the first embodiment, the person who made the order inputs order information by using an order inputting screen on the display 14 displayed by the order information inputting section 15. And also the person who made the order puts his/her finger 17 on a designated position of the fingerprint sensor 11. After this, at the fourth embodiment, the person who made the order inputs a secret code using as an encryption key to the inputting section 13.

The feature encrypting section 18 receives the secret code from the inputting section 13 and encrypts the fingerprint feature of the person who made the order outputted from the fingerprint feature extracting section 12 by using the secret code, and outputs the encrypted fingerprint feature to the order information inputting section 15. With this, the order information inputting section 15 transmits the encrypted fingerprint feature of the person who made the order and the order information to the EC server 2 through the transmitting and receiving section 16 and the network 4.

The order receiving section 211 in the EC server 2 executes processes shown in Fig. 3 explained at the first embodiment, when the order information and the encrypted fingerprint feature of the person who made the order are transmitted to the EC server 2. However, at the fourth embodiment, at the step B3 in Fig. 3, the order number and the encrypted fingerprint feature instead of the fingerprint feature are stored in the person information storage 23.

After this, when an operator of the EC server 2 inputs the order number of a dispatched article to the inputting section 26, the transmitting destination deciding section 212 executes processes shown in Fig. 4 explained at the first embodiment. However, at the fourth embodiment, the encrypted fingerprint feature instead of the fingerprint feature is searched at the step C2 and the encrypted fingerprint feature instead of the fingerprint feature is transmitted at the step C3.

The fingerprint feature storing section 35 in the person verifying terminal 3b makes the fingerprint feature storage 34 store a group of the order number, the order information, and the encrypted fingerprint feature of the person who made the order transmitted from the EC server 2.

After this, when a recipient visited a shop requires that the article is handed to the recipient, a sales clerk asks the recipient to input the order number and his/her secret code using as a decrypting key. Further, the sales clerk extracts the fingerprint feature of the finger 39 of the recipient by using fingerprint sensor 31 and the fingerprint feature extracting section 32.

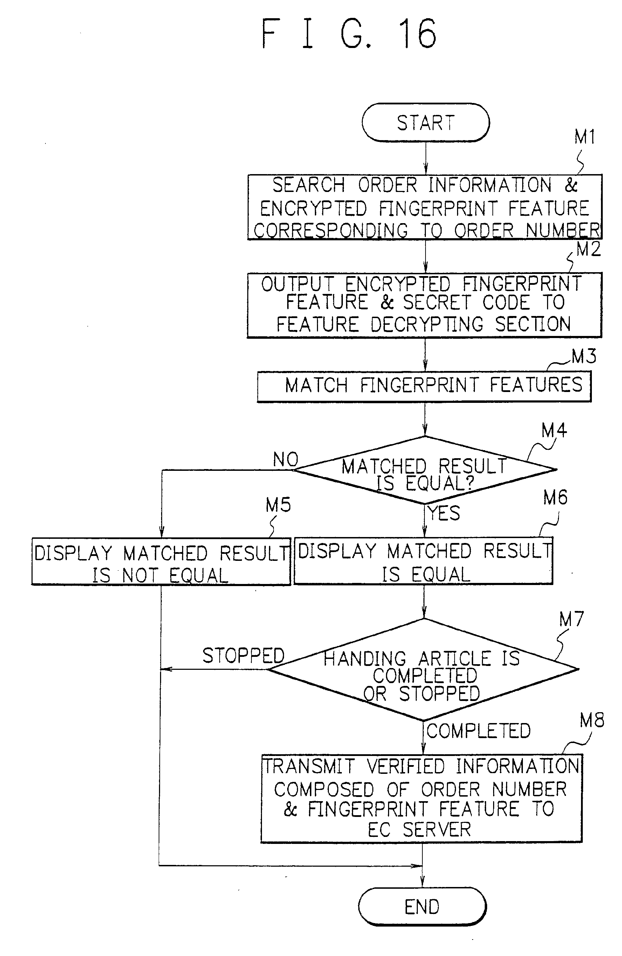

Fig. 16 is a flowchart showing processes at the fingerprint feature matching section 33b in the person verifying terminal 3b at the fourth embodiment of the system to deliver the article to the recipient using the method to verify the recipient of the delivered article of the present invention. Referring to Figs. 15 and 16, operation of the fingerprint feature matching section 33b is explained.

When the order number is inputted from the inputting section 37, the fingerprint feature matching section 33b searches the encrypted fingerprint feature and the order information stored as a group with the order number from the fingerprint feature storage 34 and makes the display 38 display the searched order information (step M1). After this, the fingerprint feature matching section 33b outputs the encrypted fingerprint feature of the person who made the order searched at the step M1 and the secret code using at the time of decryption inputted from the inputting section 37 to the feature decrypting section 41 (step M2). With this, the feature decrypting section 41 decrypts the encrypted fingerprint feature by using the secret code, and returns the decrypted fingerprint feature to the fingerprint feature matching section 33b.

The fingerprint feature matching section 33b matches the decrypted fingerprint feature of the person who made the order with the fingerprint feature of the recipient outputted from the fingerprint feature extracting section 32 (step M3).

And at the case that the matched result is not equal (NO at step M4), the fingerprint feature matching section 33b makes the display 38 display that the matched result is not equal (step M5), and the processes end. And at the case that the matched result is equal (YES at the step M4), the fingerprint feature matching section 33b makes the display 38 display that the matched result is equal (step M6). The sales clerk looked this display hands the article to the recipient, if necessary, receives the money for the article. After this, the sales clerk (article handing person) inputs that handing the article is completed to the fingerprint feature matching section 33b by using the inputting section 37 (step M7). In this, for example, when handing the article is stopped because the money is short, the sales clerk also inputs this to the inputting section 37. When it is judged that the handing the article is completed at the step M7, the fingerprint feature matching section 33b transmits verified information composed of the fingerprint feature of the recipient and the order number to the EC server 2 by using the transmitting and receiving section 36 (step M8). When it is judged that the handing the article is stopped at the step M7, the processes end.

At the fourth embodiment, when the fingerprint feature is encrypted in the ordering terminal 1a and the encrypted fingerprint feature is decrypted in the person verifying terminal 3b, it is desirable that the data of these fingerprint features do not remain in the ordering terminal 1a and the person verifying terminal 3b. And at the fourth embodiment, the secret-key cryptosystem is used, however, the other system such as a public-key cryptosystem, in which a public key is used at the ordering terminal 1a and a private key is used at the person verifying terminal 3b, can be used.

And at the second embodiment shown in Fig. 7 and the third embodiment shown in Fig. 12, the fingerprint feature of the person who made the order can be encrypted as shown in the fourth embodiment.

At the second embodiment shown in Fig. 7, at the case that the fingerprint feature of the person who made the order is encrypted, the ordering terminal 1a is used instead of the ordering terminal 1, and a feature decrypting section used at the fourth embodiment is provided in the person verifying portable terminal 5, and the fingerprint feature matching section 53 matches the fingerprint feature of the person who made the order, decrypted at this feature decrypting section, with the fingerprint feature of the recipient.

At the third embodiment shown in Fig. 12, at the case that the fingerprint feature of the person who made the order is encrypted, the ordering terminal 1a is used instead of the ordering terminal 1, and the feature decrypting section used at the fourth embodiment is provided in the EC server 2b, and the fingerprint feature matching section 28 matches the fingerprint feature of the person who made the order, decrypted at this feature decrypting section, with the fingerprint feature of the recipient.

At the embodiments of the present invention, as one of the biometrics, a fingerprint is used. In this, the biometrics is unique physiological or behavioral features that are used to identify or verify a person's identity. And, at the case that the fingerprint sensor, the fingerprint feature extracting section, and the fingerprint feature matching section are replaced with means that receives, extracts, and matches one of the other biometrics, at the present invention, one of the other biometrics such as a palm pattern, a face, an iris, a retina blood vessel pattern, a palm shape, a holograph (signature), a voice print can be used. And at each of the embodiments, at the case that a table, in which an identifier (ID) specifying each of the persons who made the orders and the fingerprint feature of each of the persons who made the orders are stored in the EC server, is used, even the ordering terminal does not have a function extracting his/her fingerprint feature, at the time when the ordered article is handed to a recipient, the recipient can be verified with his/her fingerprint. And even when an ordering terminal having a function extracting his/her fingerprint is used, it is not necessary that the fingerprint feature is extracted at every order. That is, when an article is ordered, the ID instead of the fingerprint feature of the person who made the order is transmitted to the EC server, it becomes possible that the fingerprint feature of the person who made the order is known by referring the table. Therefore, even when the ordering terminal does not transmit the fingerprint feature of the person who made the order, at the time when the article is handed to the recipient, the person who made the order can be verified with the fingerprint.

As mentioned above, according to the present invention, it is not allowed that a recipient pretends a person who made the order by that secret information of the person who made the order is leaked, and the person who made the order can be verified surely. Because, at the present invention, a biometrics data such as a fingerprint feature, which is inputted at the time when an article is ordered, is matched with a biometrics data inputted by a recipient at the time when the article is handed to the recipient.

And according to the present invention, it becomes possible to certify that the article was handed to the recipient. Because, the biometrics data inputted by the recipient at the time when the article was handed is stored as verified information.

And according to the present invention, the biometrics data of the person who made the orders are not given to sales clerks and delivery persons, therefore, the high security can be realized. Because, storing the biometrics data of the persons who made the orders and matching the biometrics data of the person who made the order with the biometrics data of the recipient can be executed at the EC server, and the biometrics data of the person who made the order are not transmitted at all to the person verifying terminal and the person verifying portable terminal.

Further, according to the present invention, it can be surely prevented that the biometrics data such as a fingerprint feature of the person who made the order is leaked and used illegally. Because, the biometrics data is encrypted and used.

While the present invention has been described with reference to the particular illustrative embodiments, it is not to be restricted by those embodiments but only by the appended claims. It is to be appreciated that those skilled in the art can change or modify the embodiments without departing from the scope and spirit of the present invention.

## Claims

1. A method to verify the recipient of a delivered article, wherein:
the biometrics data presented by a person who made an delivery order for an article when said delivery order was made is matched with the biometrics data presented by a person who is to receive delivered said article when said article is delivered.

2. A method to verify the recipient of a delivered article, wherein:
the biometrics data presented by a person who made an delivery order for an article when said delivery order was made is transmitted to the destination of said article, and said biometrics data presented by said person who made said delivery order is matched with the biometrics data presented by a person who is to receive delivered said article when said article is delivered at said destination.

3. A method to verify the recipient of a delivered article, wherein:
the biometrics data presented by a person who made an delivery order for an article when said delivery order was made is stored in a portable terminal carrying by a delivery person who delivers said article, and said biometrics data presented by said person who made said delivery order is matched with the biometrics data presented by a person who is to receive delivered said article by using said portable terminal when said article is delivered at the place where said article is delivered.

4. A method to verify the recipient of a delivered article, wherein:
the biometrics data presented by a person who made an delivery order for an article when said delivery order was made is matched with the biometrics data presented by a person who is to receive delivered said article at the destination of said article.

5. A method to verify the recipient of a delivered article in accordance with claim 4, wherein:
said biometrics data presented by said person who made said delivery order is encrypted by using a secret code inputted by said person who made said delivery order, and encrypted said biometrics data is decrypted by using a secret code inputted by said person who is to receive delivered said article at the destination of said article, and said decrypted biometrics data is matched with said biometrics data presented by said person who is to receive delivered said article at said destination of said article.

6. A method to deliver an article to a recipient, wherein:
the biometrics data of a person who is to receive an article is required to input when said article is delivered.

7. A method to deliver an article to a recipient, wherein:
the biometrics data presented by a person who made an delivery order for an article when said delivery order was made is matched with the biometrics data presented by a person who is to receive delivered said article when said article is delivered, and the matched result is shown to a person who delivers said article.

8. A method to deliver an article to a recipient, wherein:
the biometrics data presented by a person who made an delivery order for an article when said delivery order was made is transmitted to the destination of said article, and said biometrics data presented by said person who made said delivery order is matched with the biometrics data presented by a person who is to receive delivered said article when said article is delivered at said destination, and the matched result is shown to a person who delivers said article.

9. A method to deliver an article to a recipient, wherein:
the biometrics data presented by a person who made an delivery order for an article when said delivery order was made is stored in a portable terminal carrying by a delivery person who delivers said article, and said biometrics data presented by said person who made said delivery order is matched with the biometrics data presented by a person who is to receive delivered said article by using said portable terminal when said article is delivered at the place where said article is delivered, and the matched result is shown to said delivery person.

10. A method to deliver an article to a recipient comprising the step of:
inputting the biometrics data of a person who made an order for an article to an ordering terminal when said order was made;
transmitting said biometrics data of said person who made said order to an electronic commerce (EC) server from said inputting terminal;
inputting the biometrics data of a person who is to receive delivered said article to a person verifying terminal placed at the destination of said article when said article is delivered;
transmitting said biometrics data of said person who is to receive delivered said article to said EC server from said person verifying terminal;
matching said biometrics data of said person who is to receive delivered said article with said biometrics data of said person who made said order for said article at said EC server;
transmitting the matched result of said two biometrics data to said person verifying terminal from said EC server; and
showing said matched result transmitted from said EC server to a person who delivers said article.

11. A method in accordance with any one of claims 6 to 10,
wherein:
said biometrics data inputted at the time when said article was delivered is stored as verified information for the person who received said article.

12. A method in accordance with any one of claims 1 to 11,
wherein:
said biometrics data presented by said person who made said delivery order is encrypted by using a secret code inputted by said person who made said delivery order, and encrypted said biometrics data is decrypted by using a secret code inputted by said person who is to receive delivered said article when said article is delivered, and said decrypted biometrics data is matched with said biometrics data presented by said person who is to receive delivered said article.

13. A method in accordance with any one of claims 1 to 11,
wherein:
said biometrics data presented by said person who made said delivery order is encrypted by using a secret code inputted by said person who made said delivery order and encrypted said biometrics data is transmitted to the destination of said article from an ordering terminal, and transmitted encrypted said biometrics data is decrypted by using a secret code inputted by said person who is to receive delivered said article when said article is delivered, and said decrypted biometrics data is matched with said biometrics data presented by said person who is to receive delivered said article when said article is delivered at said destination.

14. A method in accordance with any one of claims 1 to 11,
wherein:
said biometrics data presented by said person who made said delivery order is encrypted by using a secret code inputted by said person who made said delivery order and encrypted said biometrics data is transmitted from an ordering terminal and stored in said portable terminal, and transmitted encrypted said biometrics data is decrypted by using a secret code inputted to said portable terminal by said person who is to receive delivered said article when said article is delivered, and said decrypted biometrics data is matched with said biometrics data presented by said person who is to receive delivered said article when said article is delivered at said place where said article is delivered.

15. A method in accordance with any one of claims 10 to 14,
further comprising the steps of:
encrypting said biometrics data presented by said person who made said delivery order by using a secret code inputted by said person who made said delivery order when said delivery order was made at said inputting terminal;
transmitting encrypted said biometrics data to said EC server from said inputting terminal;
decrypting at said EC server encrypted said biometrics data by using a secret code inputted by said person who is to receive said article and transmitted from said person verifying terminal; and
matching said biometrics data presented by said person who is to receive said article with decrypted said biometrics data at said EC server.

16. A method in accordance with any one of claims 1 to 15,
wherein:
said biometrics data is a fingerprint.

17. A system to deliver an article to a recipient, in which plural ordering terminals, an EC server, and plural person verifying terminals, are connected through a network, wherein:
each of said plural ordering terminals, comprising:
an order information inputting section to which a person who makes an order for an article inputs order information including the destination of said article when said article is ordered;
an ordering side feature extracting section for extracting the biometrics data of said person who made said order for said article; and
a transmitting and receiving section that transmits said biometrics data extracted at said ordering side feature extracting section and said order information inputted from said order information inputting section to said EC server through said network, and
said EC server, comprising:
a transmitting destination deciding section that transmits said biometrics data transmitted from said ordering terminal to a person verifying terminal corresponding to said destination in said order information transmitted from said ordering terminal through said network, and
each of said plural person verifying terminals, comprising:
a verifying side feature extracting section for extracting the biometrics data of a person who is to receive delivered said article when said article is delivered; and
a feature matching section for matching said biometrics data extracted at said verifying side feature extracting section with said biometrics data transmitted from said EC server, and for showing the matched result of said two biometrics data to an article delivering person.

18. A system to deliver an article to a recipient in accordance with claim 17, wherein:
each of said plural ordering terminals, further comprising:
a feature encrypting section for encrypting said biometrics data extracted at said ordering side feature extracting section by using a secret code inputted by said person who made said order; and
a transmitting and receiving section for encrypted data that transmits said biometrics data encrypted at said feature encrypting section and said order information inputted from said order information inputting section to said EC server through said network, instead of said transmitting and receiving section, and
said EC server, comprising:
a transmitting destination deciding section for encrypted data that transmits encrypted said biometrics data transmitted from said ordering terminal to a person verifying terminal corresponding to said destination in said order information transmitted from said ordering terminal through said network, instead of said transmitting destination deciding section, and
each of said plural person verifying terminals, further comprising:
a feature decrypting section for decrypting said encrypted biometrics data transmitted from said EC server by using a secret code inputted by said person who is to receive said article; and
a feature matching section for decrypted data for matching said biometrics data extracted at said verifying side feature extracting section with said biometrics data decrypted at said feature decrypting section, and for showing the matched result of said two biometrics data to said article delivering person.

19. A system to deliver an article to a recipient in accordance with claim 17 or 18, wherein:
said feature matching section makes said biometrics data extracted at said verifying side feature extracting section and information specifying said article that was delivered to said person who received a pair, and makes said pair verified information, and transmits said verified information to said EC server through said network, when said matched result is equal, and
said EC server further comprising:
a verified information controlling section that makes verified information storage store said verified information transmitted from said feature matching section.

20. A system to deliver an article to a recipient, in which plural ordering terminals, an EC server, and plural delivery stations, are connected through a network, and also provides plural person verifying portable terminals that are carried by delivery persons, wherein:
each of said plural ordering terminals, comprising:
an order information inputting section to which a person who makes an order for an article inputs order information including the destination of said article when said article is ordered;
an ordering side feature extracting section for extracting the biometrics data of said person who made said order for said article; and
a transmitting and receiving section that transmits said biometrics data extracted at said ordering side feature extracting section and said order information inputted from said order information inputting section to said EC server through said network, and
said EC server, comprising:
a transmitting destination deciding section that transmits said biometrics data transmitted from said ordering terminal to one of said plural delivery stations corresponding to said destination in said order information transmitted from said ordering terminal through said network, and
each of said plural delivery stations, comprising:
a loading unit for person verifying portable terminal that stores said biometrics data transmitted from said EC server, and loads said stored biometrics data on a person verifying portable terminal that required loading, and
each of said plural person verifying portable terminals, comprising:
a verifying side feature extracting section for extracting the biometrics data of a person who is to receive said article when said article is delivered; and
a feature matching section for matching said biometrics data extracted at said verifying side feature extracting section with said biometrics data loaded from said loading unit for person verifying portable terminal, and for showing the matched result of said two biometrics data to said delivery person.

21. A system to deliver an article to a recipient in accordance with claim 20, wherein:
each of said plural ordering terminals, further comprising:
a feature encrypting section for encrypting said biometrics data extracted at said ordering side feature extracting section by using a secret code inputted by said person who made said order; and
a transmitting and receiving section for encrypted data that transmits said biometrics data encrypted at said feature encrypting section and said order information inputted from said order information inputting section to said EC server through said network, instead of said transmitting and receiving section, and
said EC server, comprising:
a transmitting destination deciding section for encrypted data that transmits said encrypted biometrics data transmitted from said ordering terminal to a delivery station corresponding to said destination in said order information transmitted from said ordering terminal through said network, instead of said transmitting destination deciding section, and
each of said delivery stations, comprising:
a loading unit for person verifying portable terminal for encrypted data that stores said encrypted biometrics data transmitted from said EC server, and loads said stored encrypted biometrics data on a person verifying portable terminal that required loading, instead of said loading unit for person verifying portable terminal, and
each of said plural person verifying portable terminals, further comprising:
a feature decrypting section for decrypting said encrypted biometrics data loaded from said loading unit for person verifying portable terminal by using a secret code inputted by said person who is to receive said article; and
a feature matching section for decrypted data for matching said biometrics data extracted at said verifying side feature extracting section with said biometrics data decrypted at said feature decrypting section, and for showing the matched result of said two biometrics data to said delivery person, instead of said feature matching section.

22. A system to deliver an article to a recipient in accordance with claim 20 or 21, wherein:
said feature matching section makes said biometrics data of said person who received said article extracted at said verifying side feature extracting section and information specifying said article delivered to said person who received said article a pair, and makes said pair verified information, and makes verified information temporary storage store said verified information, when the matched result is equal, and
each of said plural delivery stations, further comprising:
an upload unit for transmitting said verified information stored in said verified information temporary storage of said person verifying portable terminal that required upload to said EC server, and
said EC server further comprising:
a verified information controlling section that makes verified information storage store said verified information transmitted from said upload unit.

23. A system to deliver an article to a recipient, in which plural ordering terminals, an EC server, and plural person verifying terminals, are connected through a network, wherein:
each of said plural ordering terminals, comprising:
an order information inputting section to which a person who makes an order for an article inputs order information including the destination of said article when said article is ordered;
an ordering side feature extracting section for extracting the biometrics data of said person who made said order for said article; and
a transmitting and receiving section that transmits said biometrics data extracted at said ordering side feature extracting section and said order information inputted from said order information inputting section to said EC server through said network, and
said EC server, comprising:
an order receiving section for making person information storage store said biometrics data transmitted from said ordering terminal; and
a feature matching section for matching the biometrics data transmitted from one of said plural person verifying terminals with said biometrics data stored in said person information storage, and for transmitting the matched result to said one of said plural person verifying terminals, and
each of said plural person verifying terminals, comprising:
a verifying side feature extracting section for extracting the biometrics data of a person who is to receive said article when said article is delivered; and
a controlling section for transmitting said biometrics data extracted at said verifying side feature extracting section to said EC server, and also for showing the matched result transmitted from said EC server to an article delivering person.

24. A system to deliver an article to a recipient in accordance with claim 23, wherein:
each of said plural ordering terminals, further comprising:
a feature encrypting section for encrypting said biometrics data extracted at said ordering side feature extracting section by using a secret code inputted by said person who made said order; and
a transmitting and receiving section for encrypted data that transmits said biometrics data encrypted at said feature encrypting section and said order information inputted from said order information inputting section to said EC server through said network, instead of said transmitting and receiving section, and
said EC server, comprising:
an order receiving section for encrypted data for making said person information storage store said encrypted biometrics data transmitted from said ordering terminal, instead of said order receiving section;
a feature decrypting section for decrypting said encrypted biometrics data stored in said person information storage by using a secret code transmitted from one of said plural person verifying terminals; and
a feature matching section for decrypted data for matching said biometrics data transmitted from one of said plural person verifying terminals with said biometrics data decrypted at said feature decrypting section, and for transmitting the matched result of said two biometrics data to said one of said plural person verifying terminals, instead of said feature matching section, and
each of said plural person verifying terminals, comprising:
a controlling section for decrypted data for transmitting said biometrics data of said person who is to receive said article and said secret code inputted by said person who is to receive said article to said EC server, and also for showing the matched result transmitted from said EC server to an article delivering person, instead of said controlling section.

25. A system to deliver an article to a recipient in accordance with claim 23 or 24, wherein:
said each of said plural person verifying terminals, comprising:
another controlling section that transmits a pair of said biometrics data extracted at said verifying side feature extracting section and information specifying said article delivered to said person who is to receive said article to said EC server through said network, and shows the matched result transmitted from said EC server to an article delivering person, instead of said controlling section, and wherein:
said feature matching section makes verified information storage store said pair of said biometrics data transmitted from said one of said plural person verifying terminals and said information specifying said article, when said matched result is equal.

26. A system in accordance with any one of claims 17 to 25,
wherein:
said biometrics data is a fingerprint.

27. A computer program storing medium, in which programs for making a computer in each of plural ordering terminals, a computer in an EC server, and a computer in each of plural person verifying terminals work are stored, wherein:
said programs in said computer in each of said plural ordering terminals, realizing:
an order information inputting section to which a person who makes an order for an article inputs order information including the destination of said article when said article is ordered;
an ordering side feature extracting section for extracting the biometrics data of said person who made said order for said article; and
a transmitting and receiving section that transmits said biometrics data extracted at said ordering side feature extracting section and said order information inputted from said order information inputting section to said EC server through said network, and
said programs in said computer in said EC server, realizing:
a transmitting destination deciding section that transmits said biometrics data transmitted from said ordering terminal to a person verifying terminal corresponding to said destination in said order information transmitted from said ordering terminal through said network, and
said programs in said computer in each of said plural person verifying terminals, realizing:
a verifying side feature extracting section for extracting the biometrics data of a person who is to receive delivered said article when said article is delivered; and
a feature matching section for matching said biometrics data extracted at said verifying side feature extracting section with said biometrics data transmitted from said EC server, and for showing the matched result of said two biometrics data to an article delivering person.

28. A computer program storing medium, in which programs for making a computer in each of plural ordering terminals, a computer in an EC server, a computer in each of plural delivery stations, and a computer in each of plural person verifying portable terminals work are stored, wherein:
said programs in said computer in each of said plural ordering terminals, realizing:
an order information inputting section to which a person who makes an order for an article inputs order information including the destination of said article when said article is ordered;
an ordering side feature extracting section for extracting the biometrics data of said person who made said order for said article; and
a transmitting and receiving section that transmits said biometrics data extracted at said ordering side feature extracting section and said order information inputted from said order information inputting section to said EC server through said network, and
said programs in said computer in said EC server, realizing:
a transmitting destination deciding section that transmits said biometrics data transmitted from said ordering terminal to one of said plural delivery stations corresponding to said destination in said order information transmitted from said ordering terminal through said network, and
said programs in said computer in each of said plural delivery stations, realizing:
a loading unit for person verifying portable terminal that stores said biometrics data transmitted from said EC server, and loads said stored biometrics data on a person verifying portable terminal that required loading, and
said programs in said computer in each of said plural person verifying portable terminals, realizing:
a verifying side feature extracting section for extracting the biometrics data of a person who is to receive said article when said article is delivered; and
a feature matching section for matching said biometrics data extracted at said verifying side feature extracting section with said biometrics data loaded from said loading unit for person verifying portable terminal, and for showing the matched result of said two biometrics data to said delivery person.

29. A computer program storing medium, in which programs for making a computer in each of plural ordering terminals, a computer in an EC server, and a computer in each of plural person verifying terminals work are stored, wherein:
said programs in said computer in each of said plural ordering terminals, realizing:
an order information inputting section to which a person who makes an order for an article inputs order information including the destination of said article when said article is ordered;
an ordering side feature extracting section for extracting the biometrics data of said person who made said order for said article; and
a transmitting and receiving section that transmits said biometrics data extracted at said ordering side feature extracting section and said order information inputted from said order information inputting section to said EC server through said network, and
said programs in said computer in said EC server, realizing:
an order receiving section for making person information storage store said biometrics data transmitted from said ordering terminal; and
a feature matching section for matching the biometrics data transmitted from one of said plural person verifying terminals with said biometrics data stored in said person information storage, and for transmitting the matched result to said one of said plural person verifying terminals, and
said programs in said computer in each of said plural person verifying terminals, realizing:
a verifying side feature extracting section for extracting the biometrics data of a person who is to receive said article when said article is delivered; and
a controlling section for transmitting said biometrics data extracted at said verifying side feature extracting section to said EC server, and also for showing the matched result transmitted from said EC server to an article delivering person.
